# EUROPÄISCHE PATENTANMELDUNG

(11) **EP 4 572 098 A1**
(43) Veröffentlichungstag der Anmeldung: **18.06.2025**
(21) Anmeldenummer: 24219692.1
(22) Anmeldetag: 13.12.2024
(51) Int. Cl.: H02K 1/32, H02K 11/33

(54) **ELEKTRISCHE ANTRIEBSEINHEIT UND EIN VERFAHREN ZUM BETREIBEN EINER SOLCHEN**

(30) Priorität: 13.12.2023 DE 102023212607
(71) Anmelder: Robert Bosch GmbH, 70442 Stuttgart (DE)
(72) Erfinder: Stueble, Jonas, 71229 Leonberg (DE); Willig, Matthias, 76137 Karlsruhe (DE); Engelberg, Ralph, 71254 Ditzingen (DE); Albrecht, Michael, 77833 Ottersweier (DE)

(57) **Zusammenfassung**

Die Erfindung betrifft eine elektrische Antriebseinheit (10), sowie ein Verfahren zum Betreiben einer solchen, insbesondere für einen Traktionsantrieb eines Kraftfahrzeugs, mit einem Stator (12), der einen Statorgrundkörper (14) aufweist, auf dem eine elektrische Wicklung (20) angeordnet ist, die am axialen Ende des Statorgrundkörpers (14) einen Wickelkopf (22) ausbildet, und axial benachbart zum Wickelkopf (22) eine Leistungselektronik (51) mit einer Kühlfläche (52) angeordnet ist, und mit einem radial innerhalb des Statorgrundkörpers (14) angeordneten Rotor (30) der eine Rotorwelle (32) aufweist, wobei innerhalb der Rotorwelle (32) ein axialer Hohlraum (34) ausgebildet ist, und die Rotorwelle (32) mindestens eine radiale Durchführung (36) aufweist, durch welche Kühlmittel (44) aus dem Hohlraum (34) gegen die Kühlfläche (52) der Leistungselektronik (51) geleitet werden kann.

## Beschreibung

### Stand der Technik

Die Erfindung betrifft eine elektrische Antriebseinheit und ein Verfahren zum Betreiben einer solchen nach der Gattung der unabhängigen Ansprüche.

Aus der EP 2 724 450 B1 ist eine elektrische Maschine bekannt geworden, die ein Statorgehäuse aufweist, in dem ein Stator mit einem bewickelten Lamellenpaket angeordnet ist. Zur Kühlung der elektrischen Wicklung weist die Rotorwelle einen zentralen Kühlkanal auf, durch den Kühlmittel geführt wird. In der Rotorwelle sind Spritzöffnungen ausgebildet, durch die das Kühlmittel auf den Wickelkopf der elektrischen Wicklung gespritzt wird. Die Spritzöffnung ist derart ausgebildet, dass das Kühlmittel auf den Eckabschnitt des Wickelkopfes auftrifft, so dass die radiale Innenseite und die axiale Endfläche des Wickelkopfes benetzt wird. Bei solch einer Ausführung ist die thermische Belastung der Leistungselektronik der beschränkende Faktor für den Betrieb der elektrischen Maschine. Daher muss gegebenenfalls nachteilig die Dauerleistung oder die thermische Verfügbarkeit des elektrischen Antriebs eingeschränkt werden.

### Offenbarung der Erfindung

Die erfindungsgemäße elektrische Antriebseinheit und das Verfahren zum Herstellen einer solchen mit den Merkmalen der unabhängigen Ansprüche haben demgegenüber den Vorteil, dass durch die Ausbildung der erfindungsgemäßen Flüssigkeitskühlung innerhalb des Motorgehäuses die Leistungselektronik vom Innenraum des Motorgehäuses mit einem Kühlmittel benetzt werden kann, um die Leistungselektronik von ihnen zu entwärmen. Dabei wird das Kühlmittel durch einen Kanal in der Rotorwelle durch eine radiale Durchführung in der Rotorwelle in Radialrichtung und/oder in Axialrichtung in den Motorinnenraum gespritzt und gegen eine innere Kühlfläche eines Kühlkörpers der Leistungselektronik geführt. Somit kann die Leistungselektronik zusammen mit der elektrischen Wicklung des Stators und gegebenenfalls zusammen mit dem Rotor durch das flüssige Kühlmittel effektiv abgekühlt werden.

Durch die in den Unteransprüchen aufgeführten Maßnahmen ergeben sich vorteilhafte Weiterbildungen und Verbesserungen der in den unabhängigen Ansprüchen angegebenen Merkmale. Durch die Anordnung der Leistungselektronik axial unmittelbar benachbart zum Wickelkopf der elektrischen Wicklung kann die Leistungselektronik zusammen mit dem Wickelkopf in einem gemeinsamen Prozess - und in einem gemeinsamen Kühlkreislauf - entwärmt werden. Bevorzugt wird die Leistungselektronik direkt mit den Drahtenden der Statorwicklung kontaktiert, sodass auf eine zusätzliche Verschaltungsplatte zwischen den Wickelkopf und der Leistungselektronik verzichtet werden kann. Dadurch kann einerseits axialer Bauraum eingespart werden und andererseits die Leistungselektronik so nah am Wickelkopf positioniert werden, dass diese beide zusammen mit dem gleichen Kühlmittel-Kreislauf abgekühlt werden können. Dabei ist die Leistungselektronik bevorzugt als Inverter für die elektrischen Maschine ausgebildet, in dem die Leistungshalbleiter unmittelbar auf dem Kühlkörper des Inverters angeordnet sind.

Besonders günstig ist es, den Inverter als Zylinderring auszubilden, dessen radiale Abmessungen in etwa denen des Statorgrundkörpers entsprechen. Dabei ist die Kühlfläche als Zylindermantelfläche an der radialen Innenseite des Inverters ausgebildet. Diese zylindrische Fläche bildet dann näherungsweise die axiale Verlängerung der radialen Innenseite des Wickelkopfes. Dadurch kann das Kühlmittel in Radialrichtung sowohl gegen die Innenseite des Wickelkopfes als auch gegen die zylindrische Kühlfläche des Inverters angeströmt werden.

In einer weiteren Ausgestaltung kann die Kühlfläche des Inverters auch als axiale Stirnfläche quer zur Rotorwelle angeordnet sein. Dabei erstreckt sich der Kühlkörper ringförmig um die Rotorwelle herum, insbesondere radial nach außen bis zum Statorgehäuse. Bei dieser Ausführung wird das Kühlmittel von der radialen Durchführung in der Rotorwelle in Axialrichtung auf die ringförmige Fläche angeströmt. Bevorzugt ist dabei der Kühlkörper gleichzeitig als Lagerschild für die Rotorwelle ausgebildet, das den Motorinnenraum axial abschließt. Dabei ist vorzugsweise in dem Kühlkörper eine Lageraufnahme für ein Rotorlager der Rotorwelle ausgebildet, wobei die Rotorwelle insbesondere axial durch den Inverter hindurchgeführt wird.

Durch die erfindungsgemäße Anordnung des Inverters sind die Transistoren der Leistungselektronik an der dem Rotor abgewandten Seite des Kühlkörpers direkt auf diesem angeordnet. Dabei wird die in den Transistoren generierte Wärme in dem Kühlkörper aufgenommen. Die innere Seite des Kühlkörpers ist als radiale und/oder axiale Fläche ausgebildet, die dem Rotorgrundkörper zugewandt ist. Die Leistungshalbleiter dienen der Stromversorgung der elektrischen Wicklung, insbesondere für einen Traktionsantrieb eines Kraftfahrzeugs, bei der über eine lange Zeit eine möglichst hohe Leistung zur Verfügung gestellt werden soll. Im Inverter ist bevorzugt auch die Ansteuerelektronik für die Kommutierung der elektrischen Wicklung angeordnet, beispielsweise auf einer Elektronikplatine. Das Motorgehäuse ist bevorzugt von einem äußeren Flüssigkeits-Kühlkreislauf - beispielsweise einer Wasserkühlung - umgeben, durch die sowohl die elektrische Wicklung als auch der Inverter von außen gekühlt werden. Im Inneren des Motorgehäuses wird dann die elektrische Wicklung und der Inverter zusätzlich durch eine Flüssigkeitskühlung abgekühlt, bei der das Kühlmittel bevorzugt als Kühl-Öl ausgebildet ist, das insbesondere als Öl-Nebel über den gesamten Innenraum des Motorgehäuses versprüht wird.

Im Betrieb der elektrischen Maschine wird das Kühlmittel durch die Fliehkraft durch die radialen Durchführungen in der Rotorwelle hindurch radial nach außen beschleunigt. Dabei können die radialen Durchführungen derart auf der Rotorwelle angeordnet sein, dass das Kühlmittel direkt auf den zylindrischen Innenmantel der Kühlfläche des Inverters trifft.

Besonders vorteilhaft können über die axiale Erstreckung der Rotorwelle mehrere radiale Durchführungen angeordnet sein, sodass weitere radiale Durchführungen auf die radiale Innenseite des Wickelkopfes gerichtet sind, wodurch das Kühlmittel von der Rotorwelle auch unmittelbar auf den Wickelkopf trifft.

In einer weiteren Ausführung sind die axialen Durchführungen in der Rotorwelle derart ausgebildet, dass das Kühlmittel direkt die axiale Stirnseite des Rotorgrundkörpers anströmt. Dadurch können beispielsweise Permanentmagnete oder eine Erregerwicklung effektiv gekühlt werden, die im Rotorgrundkörper angeordnet sind. Dabei kann das Kühlmittel an der Stirnfläche des Rotorgrundkörpers reflektiert und/oder zerstäubt, sodass das Kühlmittel von der axialen Stirnfläche des Rotors an die radiale Innenfläche des Wickelkopfes und an die Kühlfläche des Inverters weitergeleitet wird, beispielsweise als Öl-Nebel. In der gleichen Weise kann auch die dem Rotorgrundkörper gegenüberliegende axiale Stirnfläche des Inverters direkt axial mit dem Kühlmittel angeströmt werden. Dabei sind die radialen Durchführungen in der Rotorwelle derart ausgebildet, dass das Kühlmittel ohne Umwege direkt auf die ringförmige Kühlfläche trifft, die quer zur Rotorwelle angeordnet ist.

Um dem Kühlmittel beim Austritt aus der radialen Durchführung der Rotorwelle eine axiale Bewegungskomponente zu verleihen, weist die radiale Durchführung einen Austrittswinkel gegenüber der radialen Ebene auf. Dadurch verläuft die radiale Durchführung vom inneren Hohlraum der Rotorwelle schräg zu der axialen Stirnfläche hin, die direkt mit dem Kühlmittel angeströmt werden soll. Dabei kann auch die Geometrie der radialen Durchführungen derart ausgestaltet werden, dass das Kühlmittel beim Austritt aus der radialen Durchführung eine axiale Bewegungskomponente erfährt. Dabei wirkt die axiale Durchführung insbesondere als Düse, deren Austrittsrichtung für das Kühlmittel durch deren Geometrie gestaltet werden kann. Das Kühlmittel wird dabei durch die Fliehkraft immer auch radial nach außen beschleunigt, wodurch insbesondere auch eine Sogwirkung innerhalb der Rotorwelle entsteht, durch die weiteres Kühlmittel in die Rotorwelle hinein gesaugt werden kann. Somit können über die Längserstreckung der Rotorwelle und auch über den Umfang der Rotorwelle mehrere radiale Durchführungen ausgebildet werden. Durch die Wahl des Austrittswinkels kann der axiale Bereich des Wickelkopfes und der Inverter-Kühlfläche bestimmt werden, der mit dem Kühlmittel angeströmt werden soll. Insbesondere kann auch der axial dem Inverter gegenüberliegende zweite Wickelkopf mittels entsprechenden radialen Durchführungen in der Rotorwelle gekühlt werden.

Durch die hohe Drehzahl des Rotors kann das Kühlmittel im Innenraum des Motorgehäuses stark reflektiert werden, so dass das Kühlmittel auch indirekt über die axiale Stirnseite des Rotorgrundkörpers und/oder über die radiale Innenseite des Wickelkopfes zu der zylindrischen und/oder ringförmigen Kühlfläche des Inverters weitergeleitet werden kann. Dabei kann das Kühlmittel auch zu einem Art Öl-Nebel zerstäubt werden, der sowohl den Wickelkopf als auch die Kühlfläche des Inverters wirkungsvoll benetzt.

Besonders vorteilhaft wird die Flüssigkeit-Kühlung über eine hohl ausgebildete Rotorwelle mit Kühlmittel versorgt. Dabei strömt das Kühlmittel durch eine Einführöffnung am Ende der Rotorwelle in Axialrichtung durch den axialen Hohlraum der Rotorwelle und tritt im axialen Bereich der Wickelköpfe und der Kühlfläche des Inverters durch die radialen Durchführungen aus dem Inneren der Rotorwelle heraus. Das Kühlmittel wird durch die Rotation radial nach außen transportiert, so dass ständig Kühlmittel aus dem axialen Hohlraum der Rotorwelle nachgeliefert wird. Insbesondere kann durch diesen Effekt das Kühlmittel durch die Einführöffnung in der Rotorwelle aus einem Kühlmittel-Reservoir angesaugt werden. Bevorzugt sammelt sich das an der Kühlfläche erwärmte Kühlmittel durch die Schwerkraft unten an einem Auslass des Getriebegehäuses, und kann über diesen wieder an die Einführöffnung der Rotorwelle weitergeleitet werden.

Besonders bevorzugt wird diese Flüssigkeitskühlung bei einer elektrischen Maschine angewendet, bei der die elektrische Wicklung als sogenannte Steckwicklung ausgebildet ist. Dabei sind einzelne, mechanisch stabile Leiterdrähte axial in entsprechende Nuten des Statorgrundkörpers eingefügt. Der Statorgrundkörper kann beispielsweise als geschlossener Statorring ausgebildet werden, der bevorzugt aus einzelnen, axial gestapelten Blechlamellen zusammengesetzt ist. Am axialen Ende des Statorgrundkörpers ragen die Enden der Leiterdrähte axial über den Statorgrundkörper hinaus, und bilden in diesem Bereich die Wickelköpfe der elektrischen Wicklung. An den Wickelköpfen sind die einzelnen Leiterdrähte beispielsweise mechanisch miteinander verbunden, und insbesondere auch in Umfangsrichtung gegeneinander verschränkt. Dabei sind beispielsweise in Radialrichtung mehrere Schichten der Leiterenden unmittelbar benachbart zueinander angeordnet. Durch die erfindungsgemäße Flüssigkeits-Kühlvorrichtung kann der Wickelkopf über einen großen Bereich seiner radial inneren Oberfläche unmittelbar mit dem Kühlmittel angeströmt werden. In der axialen Verlängerung des Wickelkopfes kann die zylindrische Kühlfläche des Inverters in gleicher Weise mit dem Kühlmittel direkt angeströmt werden. Alternativ können jedoch auch andere Wickelköpfe mit dem Kühlmittel angeströmt werden, die mittels Spulenwickeln oder Nadelwickeln oder Flyer-Wickeln gewickelt wurden.

Besonders vorteilhaft ist die Flüssigkeits-Kühlung für eine elektrische Maschine geeignet, bei der die Rotorwelle in horizontaler Richtung angeordnet ist, beispielsweise bei einem Traktionsantrieb im Kraftfahrzeug. Aufgrund der Schwerkraft sammelt sich das Kühlmittel innerhalb des Motorgehäuses im vertikal unteren Bereich, so dass es hier besonders wichtig ist, dass der vertikal obere Bereich der Inverter-Kühlfläche oberhalb der Rotorwelle mittels der rotierenden radialen Durchführungen in der Rotorwelle gut mit Kühlmittel versorgt wird.

Mit einer solchen Flüssigkeitskühlung können elektrische Maschinen mit hoher Leistung auch für den Einsatz eines Dauerbetriebs ausreichend gekühlt werden. Durch die Rotation der Rotorwelle kann in einen Zug sowohl die elektrische Wicklung als gleichzeitig auch der Inverter wirkungsvoll im Innenraum des Motorgehäuses mit dem Kühlmittel benetzt werden. Dabei kann sowohl eine zylindrische Innenmantelfläche als auch eine axiale Stirnseite des Inverter-Kühlkörpers mit dem Kühlmittel angeströmt werden. Als Kühlmittel kann beispielsweise Kühl-Öl verwendet werden, das sich nach dem Benetzen des Wickelkopfes und der Kühlfläche der Leistungselektronik unten im Motorgehäuse sammelt, und aus diesem wieder abgeführt werden kann, um einen Kühlkreislauf zu realisieren. Durch die hohe Rotationsgeschwindigkeit des Rotors kann dabei das Kühl-Öl zu einem Öl-Nebel zerstreut werden, der sich über den gesamten Innenraum des Motorgehäuses ausbreitet, um die erzeugte Wärme aufzunehmen.

### Beschreibung der Zeichnungen

Weitere Merkmale der Erfindung ergeben sich aus den weiteren Ausführungen der Beschreibung und der Zeichnungen, wie diese in den nachfolgenden Ausführungsbeispielen der Erfindung beschrieben sind. Es zeigen:
- Fig. 1: schematisch eine erste Ausführung einer erfindungsgemäßen elektrischen Antriebseinheit, und
- Fig. 2: eine Schnittdarstellung eines weiteren Ausführungsbeispiels.

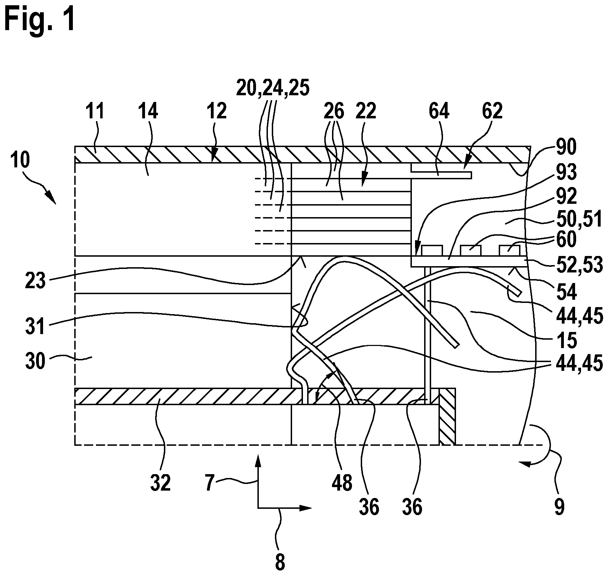

In Fig. 1 ist ein Schnitt durch eine elektrische Antriebseinheit 10 dargestellt, bei der ein Stator 12 und ein Rotor 30 innerhalb eines Motorgehäuses 11 angeordnet sind. Der Stator 12 weist einen Statorgrundkörper 14 auf, auf dem eine elektrische Wicklung 20 angeordnet ist. Dabei ragt ein Wickelkopf 22 der elektrischen Wicklung 20 axial über die axiale Erstreckung des Statorgrundkörpers 14 hinaus. Der Statorgrundkörper 14 ist beispielsweise in das Motorgehäuse 11 eingepresst. Die elektrische Wicklung 20 ist bei dieser Ausführung insbesondere als Steckwicklung 24 ausgebildet, bei der Leiterdrähte 25 über die gesamte axiale Länge von Statornuten des Statorgrundkörpers 14 in diese eingesteckt sind. Die axialen Enden 26 der Leiterdrähte 25 sind beispielsweise miteinander verschweißt und/oder umgebogen, wobei die Enden 26 der Leiterdrähte 25 dabei insbesondere den kompakten Wickelkopf 22 ausbilden. Vom Wickelkopf 22 erstrecken sich Statordrahtenden 64 in Axialrichtung 8 zu einer Leistungselektronik 51, die axial unmittelbar auf den Wickelkopf 22 aufgesetzt ist. Dabei sind die Statordrahtenden 64 beispielsweise mittels einer Direktkontaktierung 62 elektrisch mit der Leistungselektronik 51 verbunden. Die Leistungselektronik 51 ist auf einen Kühlkörper 92 angeordnet, der zum Rotor 30 hin eine Kühlfläche 52 aufweist, die mit einem Kühlmittel 44 angeströmt werden kann. Auf einer der Kühlfläche 52 abgewandten Rückseite 93 des Kühlkörpers 92 sind Leistungshalbleiter 60 angeordnet, mittels denen die elektrische Wicklung 20 bestromt wird. Beispielsweise sind die Leistungshalbleiter 60 als B6-Halbleiterbrücken ausgebildet, deren Leistungstransistoren im Betrieb Wärme generieren, die direkt vom Kühlkörper 92 aufgenommen wird. Die Leistungselektronik 51 ist bevorzugt als Inverter 50 ausgebildet mittels dem die elektrische Maschine 10 angesteuert wird. In Fig. 1 ist der Inverter 50 als zylindrisches Bauteil ausgeführt, dessen radiale Außenwand 90 in das Motorgehäuse 11 eingefügt ist. An einer radialen Innenseite 54 ist dann die zylindrische Kühlfläche 53 des zylindrischen Inverters 50 angeordnet. Der Rotor 30 ist als Innenläufer radial innerhalb der elektrischen Wicklung 20 angeordnet, wobei eine Rotorwelle 32 des Rotors 30 in Lagerschilden 16 des Motorgehäuses 11 gelagert ist. Im Ausführungsbeispiel ist die Axialrichtung 8 der Rotorwelle 32 horizontal ausgerichtet. Die elektrische Wicklung 20 und die Leistungselektronik 51 wird durch eine Flüssigkeitskühlung gekühlt, bei der Kühlmittel 44 auf den Wickelkopf 22 und auf die Kühlfläche 52 des Inverters 50 gespritzt wird, die axial über den Statorgrundkörper 14 und über den Rotor 30 hinaus ragen. Dazu weist die Rotorwelle 32 einen axialen Hohlraum 34 auf, wobei durch eine Einführöffnung 28 Kühlmittel 44 in das Innere der Rotorwelle 32 hinein gelangt, und dort in Axialrichtung 8 bis zu radialen Durchführungen 36 in der Rotorwelle 32 geführt wird. In Fig. 1 ist eine erste radiale Durchführung 36 axial nahe an einer Stirnseite 31 des Rotors 30 angeordnet, durch die das Kühlmittel 44 in Radialrichtung 7 nach außen geschleudert wird. Dabei wird das Kühlmittel 44 beispielsweise an der rotierenden Stirnseite 31 zu einem Öl-Nebel 45 zerstäubt und radial nach außen zum Wickelkopf 22 und zur Kühlfläche 52 der Leistungselektronik 51 weitergeleitet, um diese zu kühlen. Dabei nimmt das Kühlmittel 44 die in der elektrischen Wicklung 22 und in den Leistungshalbleitern 60 generierte Wärme auf, und führt diese zu einem Auslass 18 im Motorgehäuse 11 ab. Dabei kann insbesondere der gesamte Innenraum 15 des Motorgehäuses 11 mit dem Öl-Nebel 45 benetzt werden, der sich dann durch die Schwerkraft an dem Auslass 18 im Motorgehäuse 11 sammelt. Die zylindrische Kühlfläche 53 der Leistungselektronik 51 kann alternativ oder zusätzlich auch auf direktem Wege von einer radialen Durchführung 36 mit Kühlmittel 44 angeströmt werden, ohne zuvor an der Stirnseite 31 des Rotors 30 reflektiert zu werden.

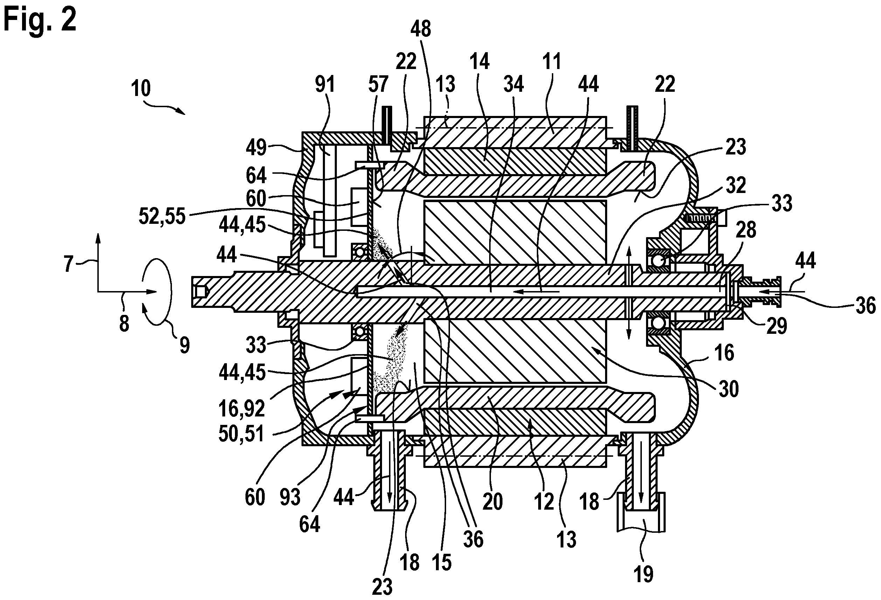

In Fig. 2 ist ein eine weitere Ausführung einer elektrischen Maschine 10 dargestellt. Die Rotorwelle 32 ist als Hohlwelle ausgebildet, sodass durch ihren inneren axialen Hohlraum 34 das Kühlmittel 44 geführt werden kann. Dabei wird das Kühlmittel 44 beispielsweise an einem Ende 29 der Rotorwelle 32 durch eine Einführöffnung 28 in die Rotorwelle 32 hineingesaugt. Durch die Rotation der Rotorwelle 32 wird das Kühlmittel 44 durch die radialen Durchführungen 36 radial nach außen geführt. Bei dieser Ausführung weisen die radialen Durchführungen 36 einen zur Radialrichtung 7 schrägen Austrittswinkel 48 auf, durch den das Kühlmittel 44 zusätzlich zur Radialkomponente auch eine Bewegungskomponente in Axialrichtung 8 erhält. Durch diese schräg ausgebildeten radialen Durchführungen 36 kann hierbei auch direkt eine Kühlfläche 52 angespritzt werden, die sich quer zur Rotorwelle 32 in Radialrichtung 7 erstreckt. Dabei ist die Leistungselektronik 51 als Ringscheibe ausgebildet, die sich in Umfangsrichtung 9 um die Rotorwelle 32 herum erstreckt. Die Leistungselektronik 51 ist wieder mit den Statordrahtenden 64 der elektrischen Wicklung 20 verbunden. Die Kühlfläche 52 ist somit als ringförmige Kühlfläche 55 mit einer axialen Stirnfläche 57 ausgebildet, die in Axialrichtung 8 von dem Kühlmittel 44 angeströmt wird. Dabei kann der ringförmige Kühlkörper 92 gleichzeitig als Lagerschild 16 ausgebildet sein, in dem die Rotorwelle 32 mittels eines Rotorlagers 33 aufgenommen ist. Die Leistungshalbleiter 60 sind wieder unmittelbar auf der Rückseite 93 des Kühlkörpers 92 angeordnet, der die in der Leistungselektronik 51 - insbesondere dem Inverter 50 - generierte Wärme aufnimmt. Der als Lagerschild 16 ausgebildete Kühlkörper 92 erstreckt sich in Radialrichtung 7 bis zur Umfangswand des Motorgehäuses 11. Der Inverter 50 wird hier von einem Gehäusedeckel 49 abgeschlossen, der axial auf die Rotorwelle 52 aufgesetzt ist. Im Inverter 50 ist zusätzlich zur Leistungselektronik 51 auch eine Ansteuerelektronik 91 für die Kommutierung der elektrischen Wicklung 20 angeordnet, die beispielsweise als Elektronikplatine realisiert ist. Die radiale Innenseite 23 des Wickelkopfes 22 kann mittels weiterer radialen Durchführungen 36 direkt mit Kühlmittel 44 angeströmt werden, die optional ebenfalls einen schrägen Austrittswinkel 48 gegenüber der Radialrichtung 7 aufweisen können. Ebenso kann der axial gegenüberliegende zweite Wickelkopf 22 auch mittels radialen Durchführungen 36 angeströmt werden, die in Fig. 2 beispielsweise in Radialrichtung 7 ausgerichtet sind. Die Fließrichtung des Kühlmittels 44, das vorzugsweise als Kühl-Öl 45 ausgebildet ist, ist in Fig. 2 schematisch durch Pfeile dargestellt. Von der Rotorwelle 32 wird das Kühlmittel 44 direkt oder indirekt zur Kühlfläche 52 des Inverters 50 geführt, und danach durch die dargestellten Auslasse 18 einem Kühlkreislauf 19 zugeführt, in dem das Kühlmittel 44 beispielsweise mittels eines Wärmetauschers oder mittels Kühlrippen abgekühlt wird, und wieder der Einführöffnung 28 zugeführt wird. Ist die Rotorwelle 32 in horizontaler Richtung angeordnet, tropft das Kühlmittel 44 durch die Schwerkraft ab, und sammelt sich am Auslass 18 des Motorgehäuses 11. Das Motorgehäuse 11 kann zusätzlich beispielsweise mittels einer Wasserkühlung entwärmt werden, bei der Kühlkanäle 13 am Umfang des Motorgehäuses 11 verlaufen.

Es sei angemerkt, dass hinsichtlich der in den Figuren und in der Beschreibung gezeigten Ausführungsbeispiele vielfältige Kombinationsmöglichkeiten der einzelnen Merkmale untereinander möglich sind. So kann beispielsweise die konkrete Kontur und Anzahl und Anordnung der radialen Durchführungen 36, sowie die Anordnung und die Ausbildung der Kühlflächen 52 des Inverters 50 entsprechend variiert werden. Als Kühlmittel 44 wird bevorzugt Kühl-Öl 45 verwendet, das durch die hohe Drehzahl des Rotors 30 insbesondere als Öl-Nebel 45 die Kühlflächen 52 benetzt. Die Kühlflächen 52 können jedoch auch mittels eines direkten Kühlmittel-Strahls 44 durch die radialen Durchführungen 36 angeströmt werden. Die Leistungselektronik 51 ist bevorzugt als Inverter 50 der elektrischen Maschine 10 ausgebildet, der Kühlflächen 52 aufweist, die der Rotorwelle 52 zugewandt sind, um vom Kühlmittel 44 aus der Rotorwelle 52 angeströmt zu werden. Zusätzlich kann die Leistungselektronik auch von einer äußeren Wasserkühlung gekühlt werden. Die elektrische Maschine 10 ist bevorzugt als elektronisch kommutierter EC-Motor ausgebildet, wobei die elektrische Wicklung 20 alternativ zur Steckwicklung 24 auch als gewickelte Spulenwicklung 20 ausgebildet sein kann. Die Erfindung eignet sich in besonderer Weise für den Drehantrieb von Komponenten oder als Traktionsantrieb im Kraftfahrzeug, ist jedoch nicht auf diese Anwendung beschränkt.

## Patentansprüche

1. Elektrische Antriebseinheit (10), insbesondere für einen Traktionsantrieb eines Kraftfahrzeugs, mit einem Stator (12), der einen Statorgrundkörper (14) aufweist, auf dem eine elektrische Wicklung (20) angeordnet ist, die am axialen Ende des Statorgrundkörpers (14) einen Wickelkopf (22) ausbildet, und axial benachbart zum Wickelkopf (22) eine Leistungselektronik (51) mit einer Kühlfläche (52) angeordnet ist, und mit einem radial innerhalb des Statorgrundkörpers (14) angeordneten Rotor (30) der eine Rotorwelle (32) aufweist, wobei innerhalb der Rotorwelle (32) ein axialer Hohlraum (34) ausgebildet ist, und die Rotorwelle (32) mindestens eine radiale Durchführung (36) aufweist, durch welche Kühlmittel (44) aus dem Hohlraum (34) gegen die Kühlfläche (52) der Leistungselektronik (51) geleitet werden kann.

2. Elektrische Antriebseinheit (10) nach Anspruch 1, **dadurch gekennzeichnet, dass** die Leistungselektronik (51) als Inverter (50) ausgebildet ist und axial unmittelbar auf den Wickelkopf (22) aufgesetzt ist, und mittels einer Direktkontaktierung (62) mit Statordrahtenden (64) des Wickelkopfes (22) elektrisch verbunden ist.

3. Elektrische Antriebseinheit (10) nach einem der vorherigen Ansprüche, **dadurch gekennzeichnet, dass** der Inverter (50) zylindrisch mit einer zylindrischen Kühlfläche (53) an seiner radialen Innenseite (54) ausgebildet ist, und das Kühlmittel (44) in Radialrichtung (7) gegen die zylindrische Kühlfläche (53) geleitet werden kann.

4. Elektrische Antriebseinheit (10) nach einem der vorherigen Ansprüche, **dadurch gekennzeichnet, dass** der Inverter (50) eine ringförmige Kühlfläche (55) aufweist, die sich mit einer axialen Stirnfläche (57) quer zur Rotorwelle (32) erstreckt, und das Kühlmittel (44) in Axialrichtung (8) gegen die ringförmige Kühlfläche (53) geleitet werden kann - und insbesondere die ringförmige Kühlfläche (55) die Rotorwelle (32) umschließt und als Lagerschild (56) für die Rotorwelle (32) ausgebildet ist.

5. Elektrische Antriebseinheit (10) nach einem der vorherigen Ansprüche, **dadurch gekennzeichnet, dass** auf der dem Rotor (30) abgewandten Seite der Kühlfläche (52) Leistungshalbleiter (60) für die Bestromung der elektrischen Wicklung (20) auf einem Kühlkörper (92) angeordnet sind.

6. Elektrische Antriebseinheit (10) nach einem der vorherigen Ansprüche, **dadurch gekennzeichnet, dass** das Kühlmittel (44) durch die mindestens eine radiale Durchführung (36) unmittelbar auf die Kühlfläche (52) des Inverters (50) gespritzt werden kann.

7. Elektrische Antriebseinheit (10) nach einem der vorherigen Ansprüche, **dadurch gekennzeichnet, dass** das Kühlmittel (44) durch die mindestens eine radiale Durchführung (36) unmittelbar an eine radiale Innenseite (23) des Wickelkopfes (22) gespritzt werden kann.

8. Elektrische Antriebseinheit (10) nach einem der vorherigen Ansprüche, **dadurch gekennzeichnet, dass** das Kühlmittel (44) durch die mindestens eine radiale Durchführung (36) unmittelbar an eine axiale Stirnseite (31) des Rotors (22) und/oder gegen die ringförmige Kühlfläche (55) gespritzt werden kann.

9. Elektrische Antriebseinheit (10) nach einem der vorherigen Ansprüche, **dadurch gekennzeichnet, dass** an der Rotorwelle (32) mindestens eine der radialen Durchführungen (36) mit einem gegenüber einer radialen Ebene schrägen Austrittswinkel (48) für das Kühlmittel (44) ausgebildet ist, wodurch insbesondere das Kühlmittel (44) mit einer axialen Bewegungs-Komponente beschleunigt werden kann.

10. Elektrische Antriebseinheit (10) nach einem der vorherigen Ansprüche, **dadurch gekennzeichnet, dass** das Kühlmittel (44) von der radialen Innenseite (23) des Wickelkopfes (22) und/oder von der axialen Stirnseite (31) des Rotors (30) an die Kühlfläche (52) des Inverters (50) weitergeleitet werden kann.

11. Elektrische Antriebseinheit (10) nach einem der vorherigen Ansprüche, **dadurch gekennzeichnet, dass** an der Rotorwelle (32) eine Einführöffnung (28) ausgebildet ist, durch die das Kühlmittel (44) in den axialen Hohlraum (34) innerhalb der Rotorwelle (32) einführbar ist - wobei die Einführöffnung (28) bevorzugt an einem axialen Ende (29) der Rotorwelle (32) angeordnet ist.

12. Elektrische Antriebseinheit (10) nach einem der vorherigen Ansprüche, **dadurch gekennzeichnet, dass** die elektrische Wicklung (20) als Steckwicklung (24) aus einzelnen, starren, axialen Leiterdrähten (25) zusammengesetzt ist, wobei axiale Enden (26) der axialen Leiterdrähte (25) aus dem Statorgrundkörper (14) heraus ragen, um den Wickelkopf (22) der elektrischen Wicklung (20) auszubilden - und insbesondere am Wickelkopf (22) in Radialrichtung (7) mehrere Schichten von axialen Enden (26) der Leiterdrähte (25) hintereinander angeordnet sind.

13. Elektrische Antriebseinheit (10) nach einem der vorherigen Ansprüche, **dadurch gekennzeichnet, dass** die Rotorwelle (32) horizontal im Kraftfahrzeug angeordnet ist, und mittels der radialen Durchführungen (36) die Kühlfläche (52) des Inverters (50) über den gesamten Umfang - auch der Teil der in Vertikalrichtung über der Rotorwelle (32) angeordnet ist - ausreichend mit Kühlmittel (44) benetzbar ist.

14. Verfahren zum Betreiben einer Elektrische Antriebseinheit (10) nach einem der vorherigen Ansprüche, mit folgenden Schritten:
- Kühlmittel (44) wird durch die Einführöffnung (28) in den axialen Hohlraum (34) der Rotorwelle (32) hinein geführt
- Beim Rotieren der Rotorwelle (32) wird Kühlmittel (44) durch die radialen Durchführungen (36) radial nach außen zur elektrischen Wicklung (20) und zu der Kühlfläche (52) des Inverters (50) geführt
- Insbesondere wird die axiale Stirnseite (31) des Rotors (30) und/oder die ringförmige Kühlfläche (55) des Inverters (50) durch radiale Durchführungen (36) mit einem schrägen Austrittswinkel (48) in Axialrichtung (8) mit Kühlmittel (44) benetzt.

15. Verfahren nach Anspruch 14, **dadurch gekennzeichnet, dass** das Kühlmittel (44) als Kühl-Öl (45) ausgebildet ist, das sich durch die Rotation der Rotorwelle (32) als Öl-Nebel über den gesamten Innenraum des Statorgehäuses (11) verteilt und dabei die Kühlfläche (52) des Inverters (50) benetzt - und insbesondere das Kühlmittel (44) durch mindestens einen Auslass (18) im Statorgehäuse (11) einem Kühlmittelkreislauf (19) zugeführt wird.
